# EUROPEAN PATENT APPLICATION

(11) **EP 4 521 164 A1**
(43) Date of publication of application: **12.03.2025**
(21) Application number: 23382921.7
(22) Date of filing: 08.09.2023
(51) Int. Cl.: G02F 1/35, G02B 5/02

(54) **METHOD FOR ENCODING INFORMATION BY VALLEY POLARIZATION IN A MATERIAL**

(71) Applicant: Fundació Institut de Ciències Fotòniques, 08860 Castelldefels (Barcelona) (ES); Forschungsverbund Berlin E.V., 12489 Berlin (DE); Institució Catalana de Recerca I Estudis Avançats, 08010 Barcelona (ES)
(72) Inventor: Ivanov, Mikhail, Berlin (DE); Smirnova, Olga, Berlin (DE); Jimenez-Galan, Alvaro, Berlin (DE); Tyulnev, Igor, Barcelona (ES); Biegert, Jens, Barcelona (ES); Poborska, Julita, Gavá (ES); Vamos, Lenard, Barcelona (ES); Silva, Rui, 28007 Madrid (ES)
(74) Representative: Grünecker Patent- und Rechtsanwälte PartG mbB

(57) **Abstract**

The present invention relates to a method for encoding information by valley polarization in a material using an electromagnetic field. The method comprises the steps of providing a material, and applying the electromagnetic field onto the material, wherein the electromagnetic field possesses an m-fold symmetry and the real-space lattice structure or real-space sub-lattice structure of the material possesses an n-fold symmetry, wherein the symmetry of the electromagnetic field corresponds to the symmetry of the real-space lattice structure or real-space sub-lattice structure of the material in such a way that n is an integer multiple of m, and wherein the electromagnetic field induces and/or manipulates valley polarization in the bandstructure of the material. The present invention further provides a device for generating an electromagnetic field suitable for inducing and/or manipulating valley polarization in a multilayer material.

## Description

The present invention relates to a method for encoding information by valley polarization in a material using an electromagnetic field, as well as a device for generating said electromagnetic field.

Valleytronics is the technique of encoding, switching and storing information in the bandstructure of materials, namely in the valley degree of freedom. Upon proper excitation with an electromagnetic field (e.g. a laser beam with an appropriate wavelength), one can induce an asymmetry of carriers between valleys in reciprocal space, in the following referred to as valley polarization, during resonant excitation of the bandgap in certain points in the bandstructure (such as the K or K' points in a hexagonal lattice). The induction of valley polarization requires spatial inversion symmetry breaking and time inversion symmetry breaking that can be achieved using circularly polarized light for exciting carriers in monolayer materials such as transition-metal-dichalcogenides (TDMCs; K. F. Mak et al. Nat. Nanotechnol. 7, 494-498 (2012)) and graphene.

Nonetheless, a current challenge and shortcoming in utilizing valley polarization is the imposition of symmetry conditions (spatial inversion symmetry breaking) that require monolayer structures or specific material engineering. In particular, valley polarization cannot be induced by common means in a multilayer material or a bulk material due to the material's spatial inversion symmetry of its naturally occurring phase. It is therefore an object of the present invention to provide a method that allows valley polarization even in a material with spatial inversion symmetry, including multilayer materials.

In order to solve the previously mentioned problems and to achieve these advantages, the invention provides a method for encoding quantum information by valley polarization in a material using an electromagnetic field according to claim 1 and a device for generating said electromagnetic field according to claim 13. Further embodiments are represented by the respective dependent claims.

The method for encoding information by valley polarization in a material using an electromagnetic field comprises the steps of providing a material and applying the electromagnetic field onto the material. Therein, the electromagnetic field possesses an m-fold symmetry and the real-space lattice structure or real-space sub-lattice structure of the material possesses an n-fold symmetry and the symmetry of the electromagnetic field corresponds to the symmetry of the real-space lattice structure or real-space sub-lattice structure of the material in such a way that n is an integer multiple of m. The electromagnetic field thus induces and/or manipulates valley polarization in the bandstructure of the material.

The present invention provides a method that induces valley polarization in the bandstructure of the material by transiently breaking time and space inversion symmetry through the interaction of the electromagnetic field with the material (or its real-space lattice structure) In other words, the present invention offers the advantage of a control mechanism for the valley polarization of a generic material, not being limited to monolayers, with a large number of potential technological applications.

Quantum information can be encoded, processed and stored in a valley pseudospin, associated with local extrema in the electronic bands of the first Brillouin zone. An electron density distribution wherein those local extrema ("valleys") are not equally populated is referred to as valley-polarized. According to the invention, such valley polarization can be induced and manipulated in bulk materials using an electromagnetic field, such as a laser beam, having a symmetry corresponding to the real-space lattice structure of the material as described. In such a case, spatial inversion symmetry breaking can be introduced through the structuring of the electromagnetic field. This approach overcomes the so-far known concept that valley polarization can only be induced in monolayer materials because multilayer systems can be symmetric under spatial inversion.

The material can be a 2D material or monolayer materials, which only possess a single atomic layer, the most prominent example being graphene. The material can also be a 3D material with at least two atomic layers of the same atomic composition. The two or more atomic layers can be stacked, and it is also possible that the layers are rotated with respect to each other. These materials will, in the following, be referred to as multilayer material. Therefore, macroscopic crystals with dimension on the order of 100 nm or more are also three-dimensional, multilayer materials. Sometimes, the latter crystals are also known as bulk material. A bulk material denotes materials whose size is 100 nm or more in all dimensions. In such materials, physical properties are independent of the size. The material is especially a solid material.

A solid material has a real-space lattice structure with an underlying symmetry, in particular, a rotational symmetry. This means that the unit cell of the lattice is invariant under a specific rotation around its geometric center. For instance, a triangular lattice remains invariant under rotations by 120° (2π/3) and a rectangular lattice is invariant under rotations by 90°. An electromagnetic field, whose symmetry corresponds the symmetry of the real-space lattice structure, remains invariant under rotations by said angle, or integer multiples thereof, around the axis of propagation of the electromagnetic field. In particular, the symmetry of the electromagnetic field corresponds to the symmetry of the real-space lattice structure of real-space sub-lattice structure. In this case, the electromagnetic field and the lattice are invariant under the same rotation angle.

The symmetry of the electromagnetic field can relate to the symmetry of the intensity distribution of the electric field, which is defined as the absolute square of the electromagnetic field distribution. For instance, a tri-foil electromagnetic field remains invariant under rotations by 120° around its axis of propagation.

It is understood that in real-world applications a perfect symmetry correspondence between the electromagnetic field and the real-space lattice structure can hardly be achieved. Nonetheless, it is sufficient that the electromagnetic field exhibits a certain periodicity that reflects the underlying symmetry. This context is further explained below.

The material can be a multilayer material, in particular, a bulk solid material.

Many materials with interesting inherent quantum properties are limited in available quality, size or environmental stability when exfoliated to the monolayer. Hence, when performing the method on a multilayer material, which is possible with the present method, a large variety of materials can be investigated. The method is thus more versatile and widely applicable.

The electromagnetic field may be off-resonant, thus not in resonance, with an interband transition of the material. In particular, the electromagnetic field may have a frequency lower than the interband transition of the material.

This means that the excitation of electrons can be off-resonant, meaning that the energy of the photons in the electromagnetic field does not match the bandgap at a certain point in reciprocal space (quasimomentum). This has the advantage that the transfer of electrons between valley states has lower losses because resonance-induced heating and other loss mechanisms occurring upon resonant excitation can be suppressed. In other words, the electromagnetic field and the material, which have corresponding symmetries, interact with each other such that the electromagnetic field modifies the band structure. In this way, the electrons in the band can be affected without the need for a resonant excitation to a higher band. In this way, the electron transfer can be carried out with high efficiency and low resonance-induced losses.

The electromagnetic field applied to the material may be a superposition of a first component and one or more other components, wherein the first component has a different polarization from the other components, and/or wherein the first component has a different wavelength from the other components. In other words, the first component may have a different spatio-temporal shape from the other components and/or the first component may have a different wavelength from the other components.

By polarization, linear polarization, circular polarization or elliptical polarization can be meant. The electromagnetic field can thus be a superposition of components that either have linear, circular or elliptical polarization with the respective basic components horizontal and vertical for the linear polarization, as well as left-circular and right-circular polarization for circular and elliptical polarization.

Such a superposition can realize various polarization patterns and/or intensity distribution patters of the electromagnetic field. Hence, the electromagnetic field can be tailored to the symmetry of the real-space lattice of the material, such that a large variety of materials can be studied with the present method.

The electromagnetic field applied to the material may be a superposition of a first component and one or more other components, wherein the first component and the other components have identical polarizations, and/or wherein the first component has a different wavelength from the other components. Likewise, such a superposition can realize various polarization patterns and/or intensity distribution patters of the electromagnetic field.

The method described so far may further comprise a validation of valley polarization in the material, wherein the validation step comprises:
measuring a part of the electromagnetic field transmitted through the material,
examining a frequency spectrum of the transmitted part of the electromagnetic field, and
attributing one or more higher harmonic components in the frequency spectrum to temporal and/or spatial inversion symmetry breaking.

Higher harmonics in the frequency spectrum of the electromagnetic field are frequency components that are integer (larger than or equal to 2) multiples of the frequency of the electromagnetic field.

These method steps provide the experimental confirmation of spatial inversion symmetry breaking induced in the material through the electromagnetic field, wherein the experimental signature is the detection of specific higher harmonic components in the frequency spectrum of the transmitted part. The method thus provides a simple yet significant way to verify the induction of spatial inversion symmetry breaking in the material.

Further aspects of the validation may comprise extracting an amplitude of the one or more higher harmonic components of the electromagnetic field transmitted through the material, and attributing the amplitude of the one or more higher harmonic components to an induced valley polarization in the bandstructure of the material.

Due to the symmetry of the material and the resulting energy and spin angular momentum conservation, there are selection rules that govern the generation and suppression of higher harmonic components. For instance, a linearly polarized electromagnetic field induces odd harmonics, especially at third, fifth and seventh order. Conversely, an electromagnetic field addressing the symmetry of the real-space lattice structure can also yield even harmonic orders. For example, the Cs-symmetry of a tri-foil electromagnetic field leads to the H(3N±1) selection rule (N is a positive integer) for the high harmonic generation with harmonic orders H(3N) being suppressed. This is a direct consequence of the breaking of spatial inversion symmetry breaking. For this example, the sixth order harmonic is suppressed while there is an eighth order harmonic in the detected frequency spectrum.

Hence, the generation and suppression of specific high harmonic components in the transmitted part of the electromagnetic field can yield a reliable indication of spatial inversion symmetry breaking, which is a prerequisite for the induction of valley polarization in the material.

It is also possible to examine the amplitude of each of the higher harmonic components. This step gives further information about potential imperfections in the experimental realization. For instance, in view of the example given above, a ninth order harmonic should be suppressed by the selection rules. Hence, the presence of a ninth-order component may hint at an imperfect three-fold symmetry in the electromagnetic field. Such a signature of an unexpected higher harmonic component may thus be used for optimizing the properties of the electromagnetic field.

Said method involving the validation may further include rotating an angle of the electromagnetic field with respect to a symmetry axis of the real-space lattice structure of the material, and examining the amplitude of the higher harmonic components depending on the angle as an indication of the breaking of spatial inversion symmetry.

An examination of the amplitude of the higher harmonic components, especially the amplitude of each of the higher harmonic components, as function of the angle of the electromagnetic field with respect to a symmetry axis of the real-space lattice structure of the material yields information about the symmetry of the lattice. When, for instance, the lattice of the material is hexagonal, an amplitude patterns repeats itself every 60° of rotation and becomes maximal when a polarization of the electromagnetic field overlaps with the Γ-K-axis of the hexagonal lattice. This method may thus serve as a confirmation of the symmetry of both the lattice of the material and the electromagnetic field.

The method described may further comprise probing generated valley polarization in the solid material, wherein the probing includes the steps of applying a probe pulse onto the material, and detecting a component of the probe pulse emitted from the material. In particular, the probe pulse may have a wavelength and/or different polarization different from the electromagnetic field. In particular, the probe pulse may have a wavelength different from the first and second component of the electromagnetic field.

The probe pulse allows for a direct probing of the presence of valley polarization in the material. The respective procedure of probing will be explained in more detail below. If the probe pulse and the electromagnetic field differ in wavelength and/or polarization, it is simpler to distinguish them upon detection or separate them prior to detection and thus to extract the wanted signal from the emitted component of the probe pulse.

The probe pulse and the electromagnetic field can overlap within the material. Said overlap improves the generation of a component of the probe pulse emitted from the material, wherein an amplitude of the component typically scales with a size of the overlap.

The component of the probe pulse emitted from the material can be a harmonic component of the probe pulse, for instance a second harmonic or third harmonic component. It has been verified in experimental and theoretical studies that the second harmonic component of the probe pulse yields a clean signature of valley polarization in the material.

This probe pulse may be linearly polarized and/or the probe pulse may not be collinear with the electromagnetic field.

When the probe pulse is not collinear with the electromagnetic field, a property of the probe pulse, like a frequency spectrum or an amplitude, can be measured without background from the electromagnetic field because they are not incident on the same detector. Thus, the relevant signal from the probe pulse is cleaner and its identification is simpler.

Further, a rotation angle between the electromagnetic field and the real-space lattice structure of the material may be varied, and the variation of the rotation angle may be associated with a variation of an intensity of the emitted component of the probe pulse.

As said, the component of the probe pulse emitted from the material may be a harmonic component of the probe pulse such as the second or third harmonic component. In particular, the component of the probe pulse emitted from the material may be different in wavelength than the probe pulse.

By rotating the electromagnetic field with respect to the real-space lattice, valley polarization can be shifted between different valleys in the bandstructure. As will be explained below with respect to an embodiment of the present invention, the relative orientation between the electromagnetic field and the real-space lattice changes the bandgap at the valleys and thus affects the electron density in the valleys. As such, it is possible to control and manipulate the valley polarization in the material by means of said angle.

In view of the above, the presence of valley polarization may be associated with the intensity of the emitted component of the probe pulse. In particular, a degree of valley polarization may be deduced from the amplitude/intensity of the emitted component of the probe pulse.

In the absence of an electromagnetic field, that addresses the symmetry of the real-space lattice structure or real-space sub-lattice structure of the material, there is no emitted component of the probe pulse in the material. The intensity of the emitted component of the probe pulse becomes maximal when the electron density distribution is maximal in a valley and minimal when the electron distribution is evenly distributed about more than one valley. Hence, the intensity of the emitted component of the probe pulse can serve as an indication of a degree of valley polarization in the material.

The material may have a hexagonal lattice structure and the electromagnetic field may have a three-fold symmetry.

Therefore, this type of symmetry in the lattice structure and the electromagnetic field is proven to provide conditions required for inducing and manipulating valley polarization in multilayer materials with at least two atomic layers.

The present invention further provides a device for generating an electromagnetic field suitable for inducing and/or manipulating valley polarization in a multilayer material according to claim 13. The device comprises a pulsed laser source configured to emit one or more light pulses and one or more optical elements that are configured to the amplitude, phase, frequency and/or polarization of the one or more light pulses.

Said device is configured to generate an electromagnetic field that is suitable for inducing and/or manipulating valley polarization in a monolayer or multilayer material. Hence, the method described herein ca, at least the method according to claim 1, be carried out with the device. The advantages obtained through the method can thus be obtained through the device in an analogous manner.

The optical elements contained in the device may include beam splitters, diffractive elements, active and passive polarization control, lenses, mirrors, fibers, structured optical materials, metamaterials and/or non-linear elements.

The device may further comprise an amplitude control unit configured to control an amplitude of the one or more light pulses. The device may further comprise a phase control unit configured to induce a phase shift in the one or more light pulses.

In particular, the amplitude and/or phase of each of the one or more light pulses can be controlled independent from one another. Independent control of each of the light pulses enables a high degree of freedom in the generation of the electromagnetic field. Hence, the electromagnetic field can be tailored with high precision, and, as a consequence, a large variety of materials with various lattice structures can be investigated using the device.

The present invention may further provide a device for generating an electromagnetic field suitable for inducing and/or manipulating valley polarization in a multilayer material. The device may comprise a pulsed laser source configured to emit a light pulse, a beam splitter configured to split the light pulse into a first light pulse and a second light pulse, a second harmonic generation unit configured to generate a second harmonic component of the first light pulse, a polarization controlling unit configured to control a polarization state of the first light pulse and the second light pulse, and a recombination unit configured to recombine the first light pulse and the second light pulse into a single light pulse.

Said device is/devices are configured to generate an electromagnetic field that is suitable for inducing and/or manipulating valley polarization in a monolayer and/or multilayer material. Hence, the method described herein ca, at least in parts, be carried out with the device. The advantages obtained through the method can thus be obtained through the device in an analogous manner.

The polarization unit can be configured to control the polarization of the first light pulse and the polarization of the second light pulse independent of each other.

The device may further comprise an amplitude control unit configured to control an intensity ratio of the second harmonic of the first light pulse and the second light pulse. The device may also comprise a phase delay unit configured to induce a phase shift of the first light pulse and/or the second light pulse.

Independent control of each of the light pulses in terms of their respective polarization, amplitude and phase enables a high degree of freedom in the generation of the electromagnetic field. Hence, the electromagnetic field can be tailored with high precision, and, as a consequence, a large variety of materials with various lattice structures can be investigated using the device.

A central wavelength of the one or more light pulses may be in the range from short-wave infrared (SWIR) to long-wave infrared (LWIR). Alternatively, a central wavelength of the first light pulse may be in the infrared region, for instance, in the range between 2.5 µm and 3.5 µm, in particular, in the range between 3.0 µm and 3.5 µm.

In most materials, the bandgap between the valence band and the conduction band is in the range from 1.5 eV to 3 eV or more and the corresponding wavelength to excite such a transition resonantly is on the order of 1 µm or less. As said previously, the valley polarization control of the disclosed method is off-resonant. A strong-field interaction between the electromagnetic field and the material reduces the band gap at specific symmetry points of the reciprocal lattice (e.g. the K and K' points in a hexagonal lattice), depending on the orientation of the electromagnetic field with respect to the real-space lattice. This process is universal due to the off-resonant excitation. Another advantage of having laser pulses in the given wavelength lies within the fact that optical elements in the infrared are easily available and efficient. Moreover, higher harmonic components are typically in the near-infrared or visible range and are technically easier to observe than ultraviolet components (for which optical components are more difficult to manufacture and less efficient).

The device may be configured to provide the electromagnetic field to carry out the methods described herein.

Further features and advantages will now be described in combination with the enclosed figures.
- Figure 1: schematically illustrates the physical principles of the method according to the present invention;
- Figure 2A: schematically illustrates the method step of probing generated valley polarization in the material;
- Figure 2B: schematically illustrates an experimental signature of valley polarization in the material; and
- Figure 3: shows a schematic representation of a device.

In the following and in the figures, if not specified to the contrary, the same reference signs denote the same or corresponding elements in the described embodiments.

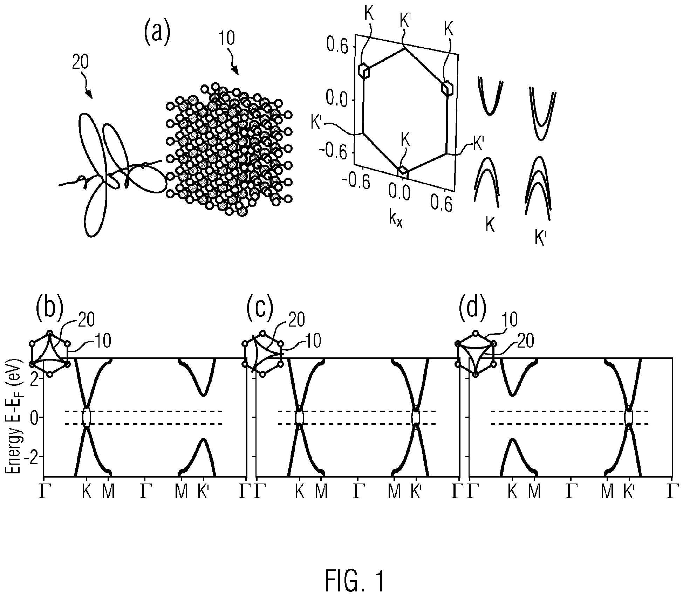

Figure 1(a) illustrates a schematic setting for carrying out the method according to the present invention. In the present example, the provided material 10 is a two-layer sample (two atomic layers) of 2H-MoS₂ having a trigonal prismatic crystal structure. Nonetheless, it is also possible to use a bulk material, i.e. a material consisting of more than two atomic layers. The thickness of the material 10 relates to the thickness in propagation direction of the electromagnetic field 20 described below. The 2H-phase of MoS₂ has a six-fold symmetry such that the real-space lattice structure of this material is invariant under rotations by 60°. Other suitable materials for carrying out the method described herein include MoS₂, MoSe₂, WS₂, WSe₂, Graphene/Graphite, h-BN and many more.

An electromagnetic field 20 is applied onto the material 10. In particular, the propagation direction of the electromagnetic 20 field is parallel to a thickness direction of the material 10 such that the electromagnetic field impinges on a surface of the material 10 at a right angle (90°). The figure also illustrates schematically the electric field distribution of the electromagnetic field 20. In the shown embodiment, the electromagnetic field 20 is three-fold symmetric, which means that the distribution of the electric field, and thus of the electromagnetic field 20, is invariant under rotations by 120° about an axis collinear with the propagation direction of the electromagnetic field 20. This representation thus illustrates the principle of a symmetry of the electromagnetic field 20 addressing a symmetry of the real-space lattice or real-space sub-lattice of the material 10. The real-space lattice or sub-lattice of the material 10 is invariant under a rotation angle of 60° (thus being 6-fold symmetric). Meanwhile, the electromagnetic field is invariant under a rotation angle of 120°. Hence, the lattice and the electromagnetic field 20 are invariant under the same rotation angle of 120° or an integer multiple thereof. This example further illustrates the combination of a 3-fold electromagnetic field and a 6-fold real-space lattice. The foldedness of the symmetry of the lattice is thus an integer multiple of the foldedness of the symmetry of the electromagnetic field 20.

The figure further illustrates valley polarization induced in the bandstructure of the material 10 by the tri-foil electromagnetic field 20. The reciprocal lattice of 2H-MoS₂ has a hexagonal symmetry and the unit cell of the lattice, as shown in the figure (part (a)), is hexagonal as well. The graph shows a calculated electron density showing a high value at K-points of the reciprocal lattice as indicated by the hexagons around the K-points (reference numeral K), while the K'-points (reference numeral K') have a low to vanishing electron density. In this case, the material 10 is said to be valley-polarized at the K-points. Upon a rotation of the electromagnetic field 20 with respect to the real-space lattice of the material 10, the energy of the K-points and the K'-points can be changed and thus the electron density can be changed as well. This context is further explained below.

The physical principle of laser-induced valley polarization is explained with reference to Figures 1(b) to 1(d). These figures show four-band tight-binding model calculations of AA-stacked graphene modified by the tri-foil electromagnetic field 20. The parameters of the model are adjusted to mimic two layers of 2H-MoS₂. The tri-foil electromagnetic field introduces complex second neighbor hopping that breaks time-reversal symmetry and lifts the valley degeneracy at the K and K' points. Depending on the orientation of the electromagnetic field 20 with respect to the real-space lattice (relative rotation, see the insets, figure parts (b), (c) and (d)), the bandstructure at the K- and K'-points changes. Due to the interaction between the electromagnetic field 20 and the material 10, the bandgap at the K- and K'-points changes selectively and so does the electron density at these points. In this manner, the electron density can be manipulated by the electromagnetic field 20 at these specific points. Since the K- and K'-points are local extrema in the bandstructure, they can be referred to as valleys. In other words, this example illustrates the underlying principle of inducing and manipulating valley polarization in a material.

In summary, the described method provides a method that uses spin-angular-momentum-shaped optical control pulses to switch the material's electronic topology to induce valley polarization by transiently breaking time and space inversion symmetry through a phase rotation. In particular, universal and non-resonant valley control at optical speeds unlocks the possibility of engineering efficient, multi-material valleytronic devices operating on quantum-coherent timescales. In other words, the present invention offers the advantage of a control mechanism for the valley polarization of bulk solid material, not being limited to monolayers, with a large number of potential technological applications.

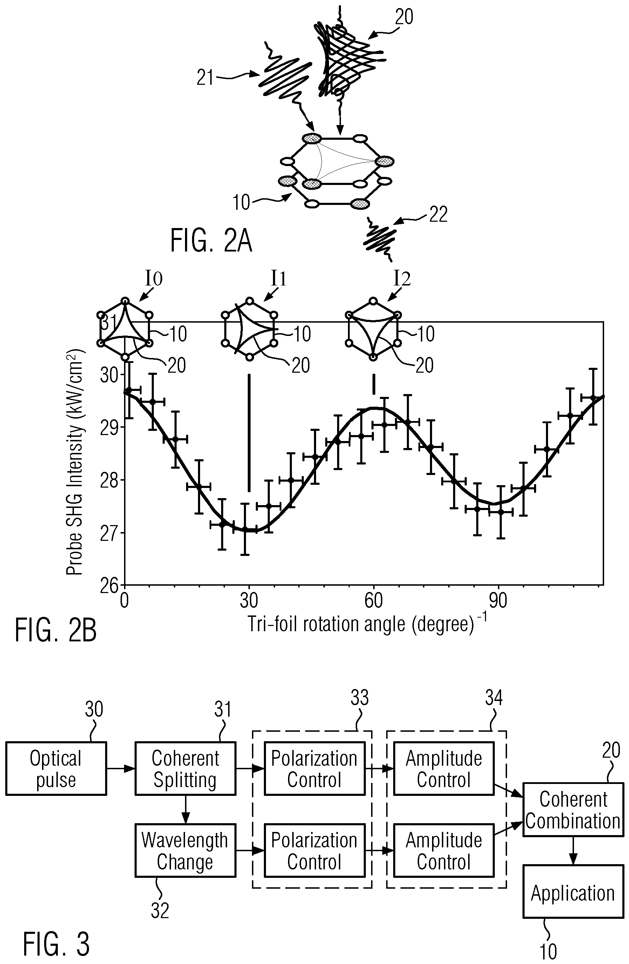

Figure 2A illustrates the method according to the present invention, including the probing of generated valley polarization in the material 10. It is provided a two-layer material 10 with a hexagonal lattice structure, but the present invention is not limited to this example and, as explained previously, the material may also be a monolayer or multilayer material and the lattice structure is not limited to hexagonal, but also includes, among others, rectangular or trigonal. An electromagnetic field 20 for controlling valley polarization is incident on the material 10. In particular, the propagation direction of the electromagnetic field 20 is perpendicular to the surface of the material 10. In addition, a probe pulse 21 is provided, which is also incident on the surface of the material. The polarization, wavelength and propagation angle of the probe pulse 21 is thereby different from those of the electromagnetic field 20.

When the material 10 is valley polarized, a second harmonic (SHG = second-harmonic generation) component 22 of the probe pulse 21 is generated as a signature of spatial inversion symmetry breaking and can be observed as being emitted from the material 10 in propagation direction of the probe pulse 21. The electromagnetic field 20 and the probe pulse 21 may overlap in the material 21 in order to maximize the amplitude of the generated second harmonic component 22 of the probe pulse. It is worth mentioning that the present method is not limited to the second harmonic component of the probe pulse 21. It is conceivable that other harmonic components are emitted. In addition, there need not be a shift in frequency, but in polarization of the emitted component 22 of the probe pulse 21.

The probe pulse 21 being different in propagation direction and/or wavelength from the electromagnetic field 20 improves the detection of a measurement signal. When the probe pulse 21 has a wavelength that differs from all components of the electromagnetic field 20, it can be discriminated easily in the detected spectrum. Moreover, the probe pulse 21 can be detected with less background or noise when the propagation directions of the probe pulse 21 and the electromagnetic field 20 are not collinear because there is less or even no contribution from the electromagnetic field 20 on a detector for the probe pulse.

Figure 2B shows experimental results on probing valley polarization in a multilayer material 10. Here, the material is a 2H-MoS₂ crystal with a thickness of 10 µm along the propagation direction of the electromagnetic field 20. The crystal has a hexagonal lattice structure, so the reciprocal lattice is hexagonal as well. The material is further probed with a probe pulse 21 at 800 nm and linear polarization to examine a change in the electronic structure and breaking of time and spatial inversion symmetry as a function of the relative orientation between the electromagnetic field 20 and the lattice.

The material 10 is subject to the electromagnetic field 20, which has a three-fold symmetry in order to address the symmetry of the real-space lattice of the material 10. The graph shows the intensity of a second harmonic component of the probe pulse 21 generated by the material as a function of the rotation angle of the tri-foil electromagnetic field 20 with respect to the lattice 10. This angle is also illustrated in the insets I0, I1 and I2, which schematically show the shape of the tri-foil electromagnetic field and the hexagonal lattice. It was confirmed that in the absence of a tri-foil electromagnetic field, no second harmonic component from the bulk is observed (excluding potential surface harmonics).

The intensity of the second harmonic component 22 of the probe pulse shows proportionality to the degree of valley polarization, reaching a maximum when the polarization of the tri-foil field is oriented along the lattice, thus confirming the induced valley polarization. The relative angle θ changes the electron density in the bandstructure of the material from a maximum at the K-point at θ = 0, to an equal distribution between K- and K'-points at θ = 30° and to a maximum at the K'-point at θ = 60°. The corresponding intensity of the second harmonic component 22 of the probe pulse exhibits a minimum for an equal distribution between K- and K'-points and a maximum for maximal distribution at the K- or K'-points.

Figure 3 shows a device 100 for generating an electromagnetic field suitable for inducing and/or manipulating valley polarization in a multilayer material according to the present invention.

For this purpose, the device 100 first comprises a pulsed laser source 30 configured to emit one or more light pulses. In case more than one light pulse is emitted, these pulses may be equally spaced in time such that a regular pulse train with a fixed repetition rate is obtained. An exemplary pulsed laser source 30 is a mid-infrared OPCPA-system (OPCPA = optical parameter chirped-pulse amplification). The central wavelength of the emitted pulses may be around 3.2 µm. The length of the emitted pulses may be in the range between 50 fs and 200 fs, in particular between 80 fs and 120 fs.

The emitted pulse/pulses are subsequently split coherently into a first light pulse and a second light pulse by means of a beam splitter 31. An exemplary beam splitter 31 may be a semi-transparent window where the transmitted part form the first light pulse and the reflected part form the second light pulse. Likewise, the first light pulse may be the reflected part and the second light pulse may be the transmitted part.

The first light pulse then proceeds to a second harmonic generation unit 32, where a second harmonic component of the first light pulse is generated. The second harmonic component has twice the central frequency and half the central wavelength of the first laser pulse.

A polarization control unit 33 controls and/or manipulates the polarization of the first light pulse (more precisely, its second harmonic component) and the second light pulse. In particular, the polarization control unit 33 may be configured to control the polarization of the first light pulse and the polarization of the second light pulse independent of each other. For this purpose, the polarization control unit 33 can comprise active and passive polarization control elements.

Further, the device 100 comprises an amplitude control unit 34 configured to control an amplitude ratio of the first light pulse and the second light pulse.

Finally, the device 100 comprises a recombination unit for recombining the first light pulse and the second light pulse into a single light pulse in a coherent manner. This results in the electromagnetic field 20 for inducing and/or manipulating valley polarization in the multilayer material. This electromagnetic field is then applied onto the multilayer material 10.

The device 100 provides the degrees of freedom necessary to generate an electromagnetic field that addresses the symmetry of the real-space lattice of the material 10. Hence, the electromagnetic field 20, especially its intensity distribution, can be tailored in a variety of patterns such that the device 100 is suitable for generating an electromagnetic field 20 that can induce and/or manipulate valley polarization in a large variety of materials 10. Those include semimetals, superconductors, composite materials and heterostructures.

Finally, a specific example for a device 100 according to the present invention is given, which is configured to generate an electromagnetic field 20 suitable for inducing valley polarization in a multilayer material 10.

As already outlined previously, the material is a 2H-MoS₂ crystal with a thickness of about 10 µm. The pulsed laser source 30 generates carrier-envelope-phase stable laser pulses at a center frequency of 3.2 µm and with an average pulse length of about 100 fs. The repetition rate of the laser pulses is 160 kHz. The pulses enter a Mach-Zehnder interferometer, wherein a second harmonic component is generated in one of the arms such that the first light pulse is doubled in its frequency. Both arms of the interferometer contain half-wave plates and quarter-wave plates to adjust the relative amplitudes and polarization states of the first light pulse and the second light pulse. An amplitude ratio of 3:2 between the second light pulse and the first light pulse for opposite helicity fields resulted in the generation of a tri-fold structure upon a coherent combination of the first and second light pulse.

The method disclosed herein provides control over the valley degree of freedom of materials through manipulation of their topology. The ability of controlling the valley degree of freedom is central to valleytronics and holds the potential to numerous applications, a few of these are summarized in the following.

In quantum computing, precise control of coherent valley transport (controlling the electron density in valleys) can allow to implement concepts of fuzzy logic with quantum operations. From a device perspective, it may be significantly easier to make a plurality of valley qubits on a layer of material in a planar architecture as compared to other modalities such as trapped ions. In addition, valley protection of spin may provide a more favorable gate-to-coherence time ratio than unprotected qubit candidates.

Valleytronics may also provide optoelectronic and photonic devices such as LEDs, photodetectors and solar cells that exploit the unique properties of valleys. The inherent optical dichroism of valleytronic materials along with means to address individual valleys through breaking time-reversal symmetry suggests that these materials may be suited to form a microphotonic optical isolator. It may further be possible to construct a gated isolator that switches direction based on the handedness of a valley current. In this context, it is possible to take advantage of the optoelectronic properties of valleytronic materials to manufacture microscale polarization-sensitive detectors for imaging applications, which enable polarization-sensitive focal plane arrays. This includes differentiating man-made objects from natural background clutter and generating high-resolution 3D reconstructions from limited data.

Moreover, the emitted light from valley states can be used for quantum computing due to its ability to carry information encoded in the valley degree of freedom. By controlling the valley states, and manipulating the emitted photons, one may create and manipulate qubits. These valley-encoded qubits can possess unique properties such as long coherence times and robustness against environmental disturbances, making them promising candidates for stable and efficient quantum computing operations. The controlled emission and detection of valley-encoded photons may serve as an essential component in the development of quantum computing architectures using valleytronic principles. Along these lines, the emitted light from valley-polarized and intrinsically correlated or entangled material states may lead to the emission of massively entangled photons for applications in quantum sensing, metrology, timing or computing.

## Claims

1. Method for encoding information by valley polarization in a material (10) using an electromagnetic field (10), the method comprising:
providing a material (10), and
applying the electromagnetic field (10) onto the material (20),
wherein the electromagnetic field (20) possesses an m-fold symmetry and the real-space lattice structure or real-space sub-lattice structure of the material (10) possesses an n-fold symmetry,
wherein the symmetry of the electromagnetic field (20) corresponds to the symmetry of the real-space lattice structure or real-space sub-lattice structure of the material (10) in such a way that n is an integer multiple of m, and
wherein the electromagnetic field (20) induces and/or manipulates valley polarization in the bandstructure of the material (10).

2. The method according to claim 1, wherein the material (10) is a multilayer material, in particular, a bulk solid material.

3. The method according to any of the proceeding claims, wherein the electromagnetic field is off-resonant with an interband transition of the material, in particular,
wherein the electromagnetic field has a frequency lower than the interband transition of the material.

4. The method according to any of the proceedings claims, wherein the electromagnetic field (20) is a superposition of a first component and one or more further components, wherein the first component has a different polarization from the other components, and/or wherein the first component has a different wavelength from the other components.

5. The method according to any of claims 1 to 3, wherein the electromagnetic field (20) is a superposition of a first component and one or more further components,
wherein the first component and the other components have identical polarizations, and/or
wherein the first component has a different wavelength from the other components.

6. The method according to any of the proceeding claims, further comprising validating valley polarization in the material (10), the validating step comprising:
measuring a part of the electromagnetic field (20) transmitted through the material (10),
examining a frequency spectrum of the transmitted part of the electromagnetic field (20), and
attributing one or more higher harmonic components in the frequency spectrum to temporal and/or spatial inversion symmetry breaking.

7. The method according to claim 6, further comprising:
extracting an amplitude of the one or more higher harmonic components, and
attributing the amplitude of the one or more higher harmonic components to an induced valley polarization in the bandstructure of the material (10).

8. The method according to claim 6 or 7, further comprising:
rotating an angle of the electromagnetic field (20) with respect to a symmetry axis of the real-space lattice structure of the material (10), and
examining the amplitude of the higher harmonic components depending on the angle as an indication of the breaking of spatial inversion symmetry.

9. The method according to any of the preceding claims, further comprising probing generated valley polarization in the material (10), wherein the probing includes the following steps:
applying a probe pulse (21) onto the material, in particular, wherein the probe pulse (21) is distinct in wavelength and/or polarization from the first component and the other components of the electromagnetic field (20); and
detecting a component (22) of the probe pulse emitted from the material (10), wherein, in particular, the probe pulse (21) is linearly polarized, and/or wherein the probe pulse (21) is not collinear with the electromagnetic field (20).

10. The method according to claim 9, wherein a rotation angle between the electromagnetic field (20) and the real-space lattice structure of the material (10) is varied, and
wherein the variation of the rotation angle is associated with a variation of an intensity of the emitted component (22) of the probe pulse.

11. The method according to claim 9 or 10, wherein an induced valley polarization is associated with the intensity of the emitted component (22) of the probe pulse,
in particular, wherein a degree of valley polarization is deduced from the intensity of the emitted component (22) of the probe pulse.

12. The method according to any of the preceding claims, wherein the material (10) has a hexagonal lattice structure, and
wherein the electromagnetic field (20) has a three-fold symmetry.

13. Device (100) for generating an electromagnetic field (20) suitable for inducing and/or manipulating valley polarization in a multilayer material (10), the device (100) comprising:
a pulsed laser source (30) configured to emit one or more light pulses, and
one or more optical elements configured to manipulate an amplitude, frequency, phase and/or polarization of the one or more light pulses, in particular,
wherein the one or more optical elements are chosen from among beam splitters, diffractive elements, active polarization control, passive polarization control, lenses, mirrors, fibers, structured optical materials, metamaterials and non-linear elements.

14. The device (100) according to claim 13, further comprising an amplitude control unit (34) configured to control an amplitude of the one or more light pulses, and/or
a phase control unit configured to induce a phase shift of the one or more light pulses.

15. Use of the device (100) according to claim 13 or 14 for performing the method according to any of claims 1 to 12.

## Amended claims

### Amended claims in accordance with Rule 137(2) EPC.

1. Method for encoding information by valley polarization in a material (10) using an electromagnetic field (10), the method comprising:
providing a material (10), and
applying the electromagnetic field (10) onto the material (20),
wherein the electromagnetic field (20) possesses an m-fold symmetry and the real-space lattice structure or real-space sub-lattice structure of the material (10) possesses an n-fold symmetry,
wherein the symmetry of the electromagnetic field (20) corresponds to the symmetry of the real-space lattice structure or real-space sub-lattice structure of the material (10) in such a way that n is an integer multiple of m,
wherein the electromagnetic field (20) induces and/or manipulates valley polarization in the bandstructure of the material (10),
wherein the material (10) is a multilayer material, in particular a bulk solid material, and
wherein the material is one of MoSe₂, WS₂ and WSe₂.

2. The method according to any of the proceeding claims, wherein the electromagnetic field is off-resonant with an interband transition of the material, in particular,
wherein the electromagnetic field has a frequency lower than the interband transition of the material.

3. The method according to any of the proceedings claims, wherein the electromagnetic field (20) is a superposition of a first component and one or more further components, wherein the first component has a different polarization from the other components, and/or wherein the first component has a different wavelength from the other components.

4. The method according to claim 1 or 2, wherein the electromagnetic field (20) is a superposition of a first component and one or more further components,
wherein the first component and the other components have identical polarizations, and/or wherein the first component has a different wavelength from the other components.

5. The method according to any of the proceeding claims, further comprising validating valley polarization in the material (10), the validating step comprising:
measuring a part of the electromagnetic field (20) transmitted through the material (10), examining a frequency spectrum of the transmitted part of the electromagnetic field (20), and
attributing one or more higher harmonic components in the frequency spectrum to temporal and/or spatial inversion symmetry breaking.

6. The method according to claim 5, further comprising:
extracting an amplitude of the one or more higher harmonic components, and
attributing the amplitude of the one or more higher harmonic components to an induced valley polarization in the bandstructure of the material (10).

7. The method according to claim 5 or 6, further comprising:
rotating an angle of the electromagnetic field (20) with respect to a symmetry axis of the real-space lattice structure of the material (10), and
examining the amplitude of the higher harmonic components depending on the angle as an indication of the breaking of spatial inversion symmetry.

8. The method according to any of the preceding claims, further comprising probing generated valley polarization in the material (10), wherein the probing includes the following steps:
applying a probe pulse (21) onto the material, in particular, wherein the probe pulse (21) is distinct in wavelength and/or polarization from the first component and the other components of the electromagnetic field (20); and
detecting a component (22) of the probe pulse emitted from the material (10), wherein, in particular, the probe pulse (21) is linearly polarized, and/or wherein the probe pulse (21) is not collinear with the electromagnetic field (20).

9. The method according to claim 8, wherein a rotation angle between the electromagnetic field (20) and the real-space lattice structure of the material (10) is varied, and
wherein the variation of the rotation angle is associated with a variation of an intensity of the emitted component (22) of the probe pulse.

10. The method according to claim 8 or 9, wherein an induced valley polarization is associated with the intensity of the emitted component (22) of the probe pulse,
in particular, wherein a degree of valley polarization is deduced from the intensity of the emitted component (22) of the probe pulse.

11. The method according to any of the preceding claims, wherein the material (10) has a hexagonal lattice structure, and
wherein the electromagnetic field (20) has a three-fold symmetry.
